# EUROPEAN PATENT APPLICATION

(11) **EP 2 148 122 A1**
(43) Date of publication of application: **27.01.2010**
(21) Application number: 09166349.2
(22) Date of filing: 24.07.2009
(51) Int. Cl.: F16L 37/23, F16L 37/32

(54) **Quick coupling with inner clearance recovery**

(30) Priority: 24.07.2008 IT MI20081344
(71) Applicant: Faster S.P.A., 20124 Milano (IT)
(72) Inventor: Rusconi, Paolo, 26010, RIVOLTA D'ADDA (IT); Rossetti, Daniele, 26010, DOVERA (IT)
(74) Representative: Borsano, Corrado

(57) **Abstract**

A quick coupling with inner clearance recovery, adapted to receive a male element and having a main channel (10), with a pulse-pressurized, hydraulic fluid subjected to sudden direction changes flowing therethrough, thus providing the female element with a chamber (12), therein coupled to the main channel (10) through a calibrated orifice (13), capable of allowing an axial translation of the inner moving components by means of the fluid pressure, and provided with a recovery spring (20), which returns the system to the initial conditions.

## Description

The present invention relates to a quick coupling with inner clearance recovery consisting of a female element, adapted to receive a male element.

Quick couplings of this type are known from the prior state of the art.

These quick couplings are used to connect tubes conveying pressurized fluid. The function of the invention is to recover the whole inner clearance of mechanical components. Such a clearance is due to the natural sum of the tolerances of each single component; when the inner components are subjected to sudden changes in flow direction and high pressure pulsation frequencies, all the inner components, especially those in which the aforesaid clearance is generated, are subjected to intensive strain and/or peening wear.

Such a strain reduces the strength and life of the inner components, and therefore the life of the quick coupling as a whole.

This strain and/or wear phenomena are particularly accentuated when the quick coupling is used in combination with building demolition apparatuses, in this case hydraulic hammers, e.g. connected to breakers.

It is thus the object of the present invention to obviate the drawbacks belonging to the prior state of the art, thus canceling the strain effects of the mechanical inner moving members because of pressure pulsations and hydraulic fluid flow inversions.

The object thus devised will now be described in greater detail by means of an embodiment provided by way of example and illustrated in the accompanying drawings, in which:
figure 1 shows a partial section view of this female quick coupling, highlighting the inner components thereof;
figure 2 diagrammatically shows, in a separate manner, the inner components subjected to axial translation of the coupling and already shown in figure 1;
figure 3 shows a partial section view of the female-type coupling coupled to a male coupling;

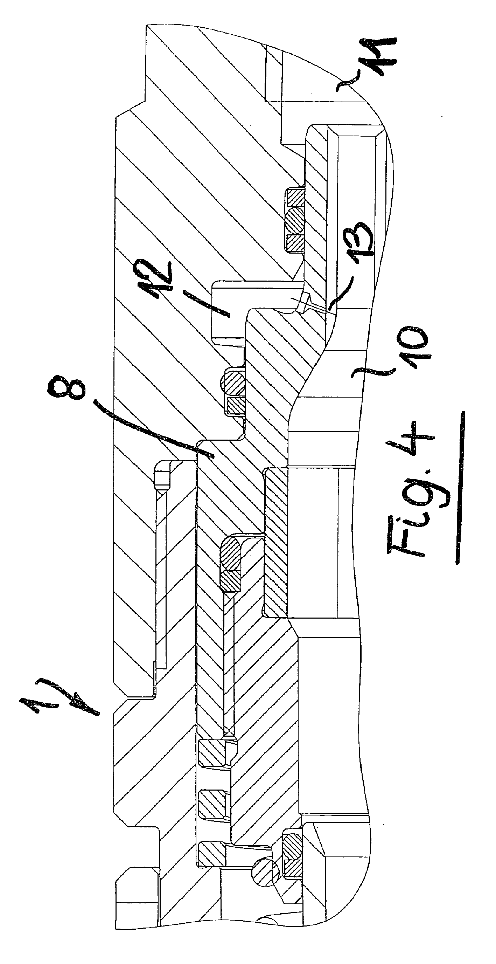

figure 4 shows a detail of the female coupling, highlighting the area of the aforesaid chamber, calibrated orifice and recovery spring;

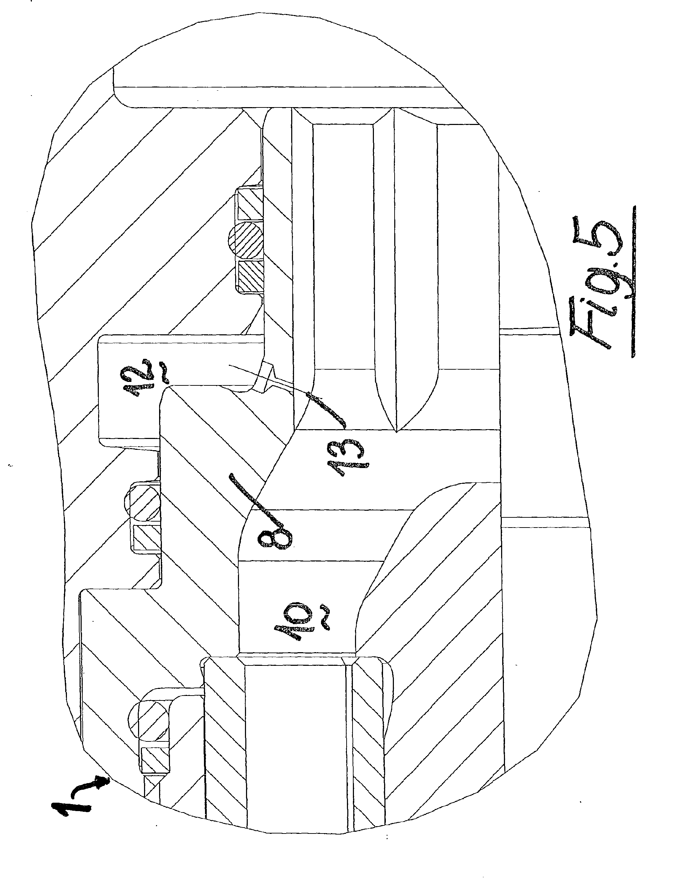

figure 5 shows an enlarged detail of the device already described in figure 4; figure 6 shows a diagram plotting the progress of the pressures inside the quick coupling object of the invention, during the operation of a user, e.g. a hydraulic demolition hammer.

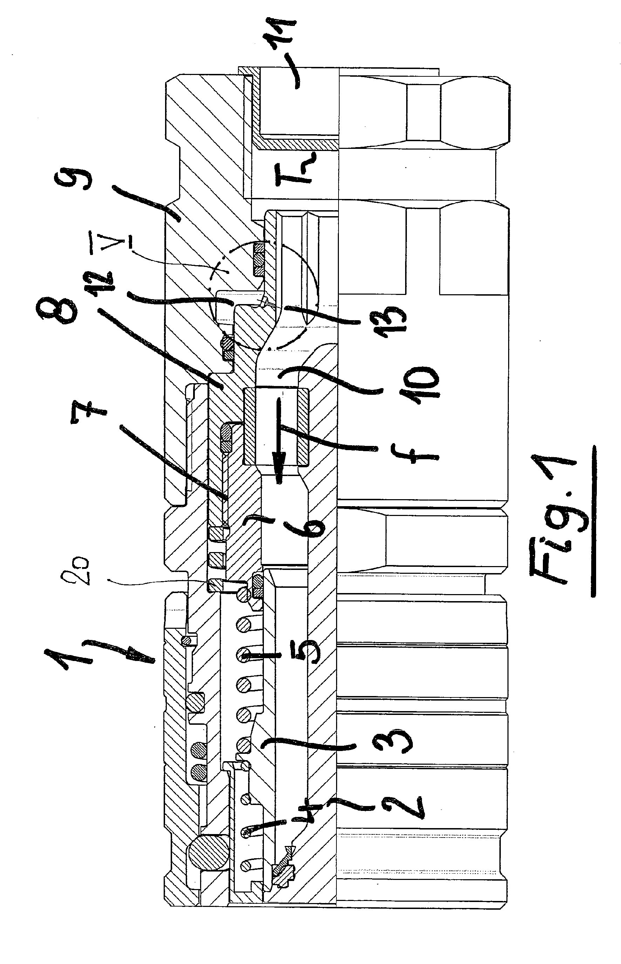

Figure 1 shows a quick, female-type coupling, indicated by numeral 1 as a whole, partially in section and partially in view.

A stem 2 (valve) surrounded by a tubular body 3 (slider) kept in the closing position by the helical springs 4 and 5 is provided inside the coupling 1.

The slider 3 is able to axially slide within a body 6 (front body) firmly connected through a threading to a second body 8 (rear body) arranged within a body 9. The rear body 8 is in turn influenced by a strong spring 20 (recovery spring) which biases the body 8 in abutment on the body 9 when there is no pressure inside the coupling.

A passage 10 is made between bodies 6 and 8, through which a pressurized fluid, supplied by a pressure source through the treaded opening 11, obviously free from protective plug T, flows in an alternate direction.

The pressurized fluid may always flow in one direction, e.g. from the right to the left or vice versa, or in an alternate direction in an intermittent manner, as indicated by the arrow (f).

An annular chamber 12 is made between rear body 8 and body 9 which, through a small calibrated orifice 13, is operatively connected to the channel 10, which accommodates the flowing, pressurized fluid.

When the channel 10 is subjected to pressure increase, the chamber 12 will also be filled with fluid (at the same pressure), thus generating a hydraulic thrust in the direction R, given by the difference of positive buoyancy underneath the sections S1 e S2 and respective seals 15 and 14, in the chamber itself.

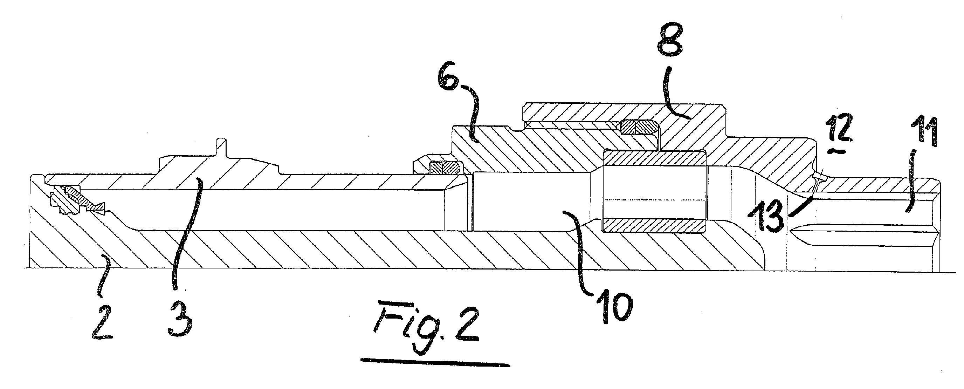

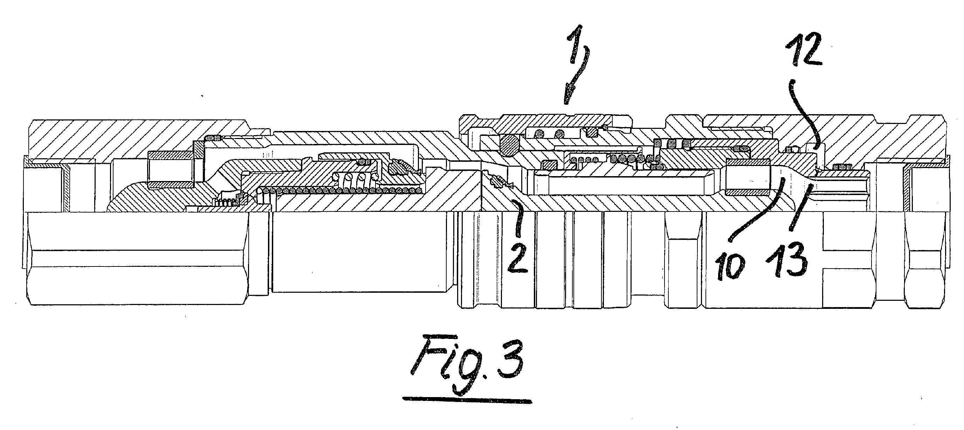

Such a thrust is able to move all the components shown in figure 2 in the direction R, which will recover the clearance G highlighted in figure 3.

The diameter of orifice 13 is appropriately calibrated according to experiments and is chosen so as to create a fluid bottleneck between the channel 10 and the annular chamber 12.

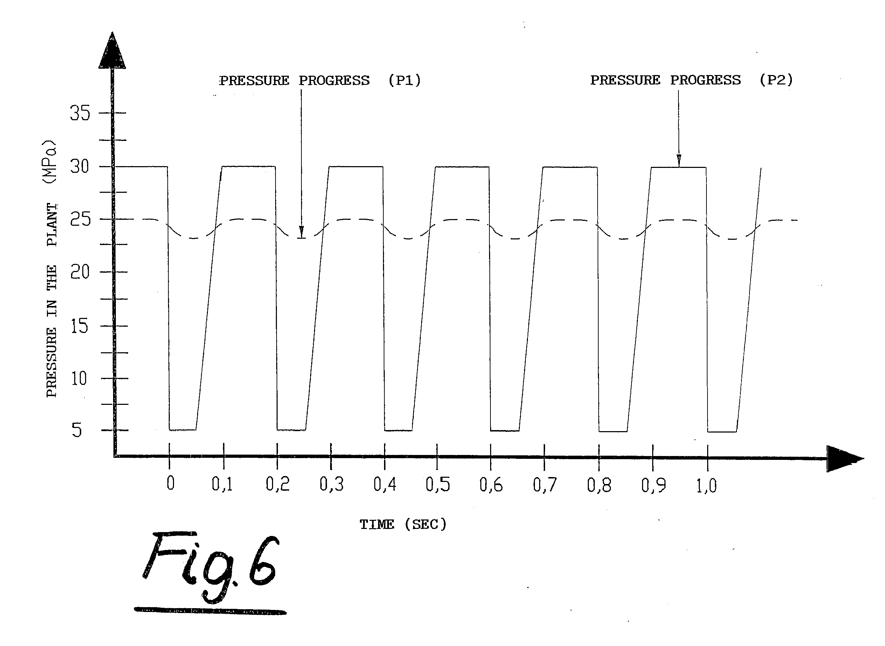

This additional pressure in the chamber 12 acts on the rear body 8, thus keeping the elements 2-3-6-8 constantly biasing in the direction R, even during pressure oscillations in the channel 10, which will be better described in figure 6.

Figure 6 shows a chart displaying the pressure progress during the step of working of the user (demolition hammer) connected to a pressurized fluid source.

The chart further shows that pressure P2 in the chamber 10 behaves so as to strongly oscillate between a minimum value and a maximum value. These oscillations are typical of demolition apparatuses, such as hydraulic hammers, in which the flow direction is continuously and constantly alternated, thus obtaining pressures from 0 (step of inverting the flow direction) to a maximum value (working pressure of the user).

On the contrary, the chart indicates that pressure P1 in the annular chamber 12 shows a virtually constant progress due to the calibrated orifice 13 which limits the immediate depressurization of the annular chamber 12 when the pressure value is minimum in channel 10.

Such a bottleneck generated by the calibrated orifice 13 is thus capable of determining a pressure load loss in chamber 12 with respect to chamber 10.

In brief, the result is that when the pressure in pipe 10 drops to minimum values, some pressure is instead still preserved in the annular chamber 12, which pressure can generate the thrust R on the above-described components.

## Claims

1. A quick coupling, adapted to receive a male element and having a main channel, therethrough flows a pressurized hydraulic fluid subjected to abrupt flow direction changes, **characterized in that** said quick coupling (1) comprises an inner chamber (12) coupled through a calibrated orifice (13) to said pressurized hydraulic fluid main channel (10) to allow inner elements of said inner chamber (12) to be axially driven, with a recovering spring (20) for operation under a long pressure lacking condition.

2. A quick coupling, according to claim 1, **characterized in that** said inner chamber (12) coupled through said calibrated orifice (13) has an anular configuration.

3. A quick coupling, according to claims 1 and 2, **characterized in that** said orifice (13) has a metered and calibrated size.
